# EUROPEAN PATENT APPLICATION

(11) **EP 4 764 475 A1**
(43) Date of publication of application: **24.06.2026**
(21) Application number: 25816084.5
(22) Date of filing: 26.05.2025
(51) Int. Cl.: G01N 23/046, G01N 23/18, G06V 10/82, G06N 3/094

(54) **BATTERY IMAGE ANALYSIS DEVICE AND OPERATION METHOD THEREOF**

(30) Priority: 28.05.2024 KR 20240069549
(71) Applicant: LG Energy Solution, Ltd., Seoul 07335 (KR)
(72) Inventor: JANG, Dong Hyuk, Daejeon 34122 (KR)
(74) Representative: Goddar, Heinz J.
(86) International application number: PCT/KR2025/007053
(87) International publication number: WO 2025/249842

(57) **Abstract**

A battery image analysis device according to an embodiment disclosed in this document includes an acquisition unit configured to acquire a first image regarding a battery, a conversion unit configured to convert the first image into a second image corresponding to a designated style including one or more of brightness and size of an image based on a deep learning model based on style transfer, a configuration extraction unit configured to extract an image regarding each of the configurations of the battery based on a plurality of pixels included in the second image, a coordinate data acquisition unit configured to acquire coordinate data of pixels of each of the configurations, and a diagnosis unit configured to diagnose a state of the battery based on the coordinate data.

## Description

### TECHNICAL FIELD

### Cross-reference to Related Applications

This application claims priority from Korean Patent Application No. 10-2024-0069549, filed on May 28, 2024, the disclosure of which is incorporated by reference herein.

### Technical Field

Embodiments disclosed in this document relate to a battery image analysis device and an operating method thereof.

### BACKGROUND ART

Recently, research and development on secondary batteries has been actively conducted. Here, secondary batteries are batteries that can be charged and discharged, and may be interpreted including both conventional Ni/Cd batteries, Ni/MH batteries, and recent lithium ion batteries. Among secondary batteries, lithium ion batteries have the advantage of having much higher energy density than conventional Ni/Cd batteries and Ni/MH batteries, etc. In addition, lithium ion batteries may be manufactured to be small and lightweight, and thus lithium ion batteries are used as power sources for mobile devices. Recently, the scope of use of the lithium ion batteries has expanded to include a power source for electric vehicles, and the lithium ion batteries are attracting attention as a next-generation energy storage medium.

Secondary batteries are classified into cylindrical batteries in which an electrode assembly is embedded in a cylindrical metal can, prismatic batteries in which an electrode assembly is embedded in a square metal can, and pouch-type batteries in which an electrode assembly is embedded in a pouch-type case made of aluminum laminate sheets, depending on a shape of a battery case. Among the secondary batteries, the cylindrical batteries have the advantages of relatively large capacity and structural stability.

The electrode assembly embedded in a battery case is a chargeable and dischargeable power generating device having a stacked structure of a positive electrode/separator/negative electrode, and is classified into a jelly-roll type, a stack type, and a stack/folding type electrode assembly. The jelly-roll type electrode assembly has a form in which a long sheet-shaped positive electrode and negative electrode coated with an active material are wound with a separator interposed between the positive electrode and negative electrode, the stack type has a form in which a plurality of positive electrodes and negative electrodes of a predetermined size are sequentially stacked with a separator interposed therebetween, and the stack/folding type has a composite structure of the jelly-roll type and the stack type. Among the electrode assemblies, the jelly-roll type electrode assembly has the advantages of being easy to manufacture and having high energy density per weight.

### DISCLOSURE OF THE INVENTION

### TECHNICAL PROBLEM

Whether or not these cylindrical batteries are defective can be determined by analyzing images obtained by imaging the inside of the battery (e.g., computed tomography (CT) images). However, in the past, there were inefficiencies in terms of analysis time and analysis accuracy because engineers individually judged the images and adjusted the contrast value, etc. to extract and analyze electrode images (e.g., positive electrode images and/or negative electrode images).

In addition, since the size and brightness of the images may be captured differently depending on the specifications of the CT imaging device and/or the imaging environment, there is a problem that a separate analysis method should be used for each captured image.

The technical problems of the embodiments disclosed in this document are not limited to the technical problems mentioned above, and other technical problems that are not mentioned may be clearly understood by those skilled in the art from the descriptions below.

### TECHNICAL SOLUTION

A battery image analysis device according to an embodiment disclosed in this document includes an acquisition unit configured to acquire a first image regarding a battery, a conversion unit configured to convert the first image into a second image corresponding to a designated style including one or more of brightness and size of an image based on a deep learning model based on style transfer, a configuration extraction unit configured to extract an image regarding each of the configurations of the battery based on a plurality of pixels included in the second image, a coordinate data acquisition unit configured to acquire coordinate data of pixels of each of the configurations, and a diagnosis unit configured to diagnose a state of the battery based on the coordinate data.

In an embodiment, the configuration extraction unit may be configured to extract the image regarding each of the configurations of the battery based on at least one pixel having a pixel value greater than or equal to a threshold value among a plurality of pixels included in the second image.

In an embodiment, the designated style may further include configuration information regarding a target configuration among the configurations of the battery included in the first image, the conversion unit may be configured to convert an image corresponding to the target configuration among the configurations of the battery included in the first image into the second image based on the configuration information, and the configuration extraction unit may be configured to extract the image corresponding to the target configuration from the second image.

In an embodiment, the diagnosis unit may be configured to diagnose the state of the battery by calculating one or more of a curvature and a flatness fraction of the battery based on the coordinate data.

In an embodiment, the battery image analysis device may further include a model management unit configured to generate the deep learning model based on a generative adversarial network (GAN) algorithm.

In an embodiment, the model management unit may be configured to store training data including a plurality of input images for training corresponding to the first image and a plurality of output images for training corresponding to the second image, and train the deep learning model based on the training data.

An operating method of a battery image analysis device according to an embodiment disclosed in this document includes an operation of acquiring a first image regarding a battery, an operation of converting the first image into a second image corresponding to a designated style including one or more of brightness and size of an image based on a deep learning model based on style transfer, an operation of extracting an image regarding each of the configurations of the battery based on a plurality of pixels included in the second image, an operation of acquiring coordinate data of pixels of each of the configurations, and an operation of diagnosing a state of the battery based on the coordinate data.

In an embodiment, the operation of extracting may include an operation of extracting the image regarding each of the configurations of the battery based on at least one pixel having a pixel value greater than or equal to a threshold value among a plurality of pixels included in the second image.

In an embodiment, the designated style may further include configuration information regarding a target configuration among the configurations of the battery included in the first image, the operation of converting may include an operation of converting an image corresponding to the target configuration among the configurations of the battery included in the first image into the second image based on the configuration information, and the operation of extracting may include an operation of extracting the image corresponding to the target configuration from the second image.

In an embodiment, the operation of diagnosing may include an operation of diagnosing the state of the battery by calculating one or more of a curvature and a flatness fraction of the battery based on the coordinate data.

In an embodiment, the operating method of the battery image analysis device may further include an operation of generating the deep learning model based on a generative adversarial network (GAN) algorithm.

In an embodiment, the operating method of the battery image analysis device may further include an operation of storing training data including a plurality of input images for training corresponding to the first image and a plurality of output images for training corresponding to the second image, and training the deep learning model based on the training data.

### ADVANTAGEOUS EFFECTS

According to embodiments disclosed in this document, the time required to analyze an image regarding a battery can be reduced.

According to the embodiments disclosed in this document, the error in the image analysis regarding the battery can be reduced by minimizing the intervention of an engineer.

According to the embodiments disclosed in this document, by utilizing a deep learning model based on style transfer to convert images captured in various imaging environments into images of a designated style, the deviation between images (e.g., brightness and size of the image) depending on the equipment and environment for imaging the battery can be reduced.

The effects of the battery diagnosis device and the operating method thereof according to the disclosure of this document are not limited to the effects mentioned above, and other effects not mentioned will be clearly understood by those skilled in the art according to the disclosure of this document.

### BRIEF DESCRIPTION OF THE DRAWINGS

FIG. 1 is a cross-sectional view of a cylindrical secondary battery including a jelly-roll electrode assembly.
FIG. 2 is a block diagram of a battery image analysis device according to an embodiment.
FIG. 3a and FIG. 3b are diagrams showing a first image regarding a battery acquired by a battery image analysis device according to an embodiment.
FIG. 4a and FIG. 4b illustrate a first image and a second image obtained by converting the same according to an embodiment
FIG. 5 is a flowchart showing an operating method of a battery image analysis device.

In relation to the description of the drawings, the same or similar reference numerals may be used for the same or similar components.

### MODE FOR CARRYING OUT THE INVENTION

Hereinafter, embodiments of the present invention will be described with reference to the accompanying drawings. However, this is not intended to limit the present invention to a specific embodiment, but should be understood to include various modifications, equivalents, and/or alternatives of the embodiments of the present invention.

It should be understood that embodiments of this document and the terminology used therein are not intended to limit the technical features described in this document to specific embodiments, but rather to encompass various modifications, equivalents, or alternatives of the embodiments. In connection with the description of the drawings, similar reference numerals may be used for similar or related components. The singular form of a noun corresponding to an item may include one or more of said item, unless the relevant context clearly indicates otherwise.

In this document, each of phrases "A or B", "at least one of A and B", "at least one of A or B", "A, B, or C", "at least one of A, B, and C", and "at least one of A, B, or C" may include any one of the items listed together in that phrase among the phrases, or all possible combinations thereof. Terms such as "first", "second", or "firstly" or "secondly" may be used merely to distinguish one component from another, and, unless otherwise specifically stated, do not limit the components in any other respect (e.g., importance or order).

In this document, when a component (e.g., a first component) is referred to as being "coupled", "connected", or "joined" to another component (e.g., a second component), with or without the terms "functionally" or "communicatively", it means that the component can be connected to the other component directly (e.g., in a wired manner or wirelessly) or indirectly (e.g., through a third component).

The method according to various embodiments disclosed in this document may be provided by being included in a computer program product. The computer program product may be traded between a seller and a buyer as a product. The computer program product may be distributed in the form of a machine-readable storage medium (e.g., a compact disc read only memory (CD-ROM)), or may be distributed online (e.g., downloaded or uploaded) through an application store or directly between two user devices. In the case of online distribution, at least a part of a computer program product may be temporarily stored or temporarily generated in a machine-readable storage medium such as a memory of a manufacturer's server, an application store's server, a relay server.

According to the embodiments disclosed in this document, each component (e.g., a module or a program) of the components described above may include a single or a plurality of entities, and some of the plurality of entities may be separated and placed in other components. According to the embodiments disclosed in this document, one or more of the components described above among the components or operations may be omitted, or one or more other components or operations may be added. Alternatively or additionally, a plurality of components (e.g., modules or programs) may be integrated into a single component. In such a case, the integrated component may perform one or more functions of each of the plurality of components identically or similarly to those performed by the corresponding component among the plurality of components prior to the integration. According to the embodiments disclosed in this document, the operations performed by a module, program, or other component may be performed sequentially, in parallel, repeatedly, or heuristically, or one or more of the operations may be performed in a different order, omitted, or performed by adding one or more other operations.

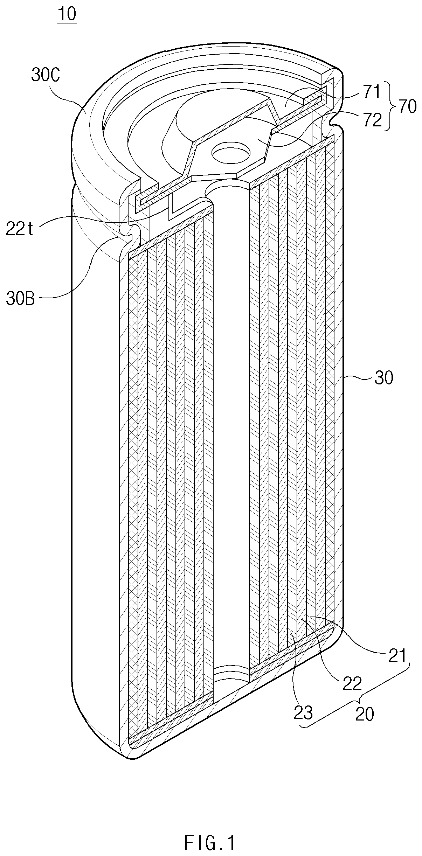

FIG. 1 is a cross-sectional view of a cylindrical secondary battery including a jelly-roll type electrode assembly.

Referring to FIG. 1, a cylindrical secondary battery 10 may be manufactured by housing a jelly-roll type electrode assembly 20 in which a negative electrode 21, a positive electrode 22, and a separator 23 are wound in a cylindrical battery case 30, injecting an electrolyte into a battery case 30, and then joining a cap assembly 70 to an upper end of the battery case 30.

The cap assembly 70 may include a cap plate 72 that is in close contact with an upper end cap 71 that forms a positive electrode terminal. A positive electrode tab 22t extended from the positive electrode 22 is connected to the cap plate 72, and thus the upper end cap 71 may function as the positive electrode terminal.

In order to ensure stable coupling of the cap assembly 70 and prevent movement of the electrode assembly 20, a beading portion 30B and a crimping portion 30C may be formed on the battery case 30.

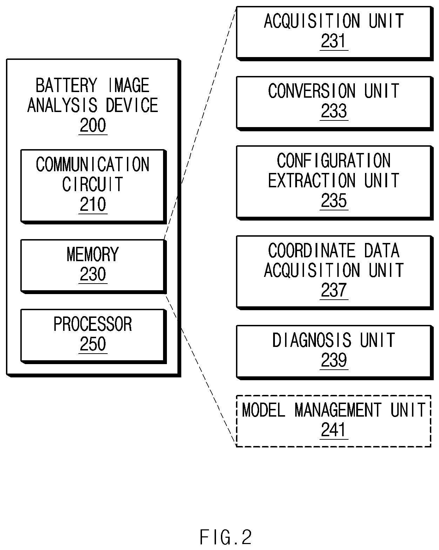

FIG. 2 is a block diagram of a battery image analysis device according to an embodiment.

Referring to FIG. 2, a battery image analysis device 200 may include a communication circuit 210, a memory 230, and a processor 250. According to the embodiment, the battery image analysis device 200 illustrated in FIG. 2 may further include at least one component (e.g., a display, an input device, or an output device) other than the components illustrated in FIG. 2.

The communication circuit 210 may establish a wired communication channel and/or a wireless communication channel between the battery image analysis device 200 and an external electronic device (e.g., an image capturing device), and may transmit and receive data with the external electronic device through the established communication channel.

In an embodiment, the communication circuit 210 may acquire an image regarding a battery (e.g., a cylindrical battery) from the external electronic device. Here, the image regarding the battery may include a computed tomography (CT) image and an X-ray image based on a non-destructive method, and may include an image obtained by actually disassembling the battery and imaging a cross-section thereof.

The memory 230 may include a volatile memory and/or a non-volatile memory.

In an embodiment, the memory 230 may store data used by at least one component (e.g., the processor 250) of the battery image analysis device 200. For example, the data may include software (or instructions related thereto), input data, or output data. In an embodiment, the instructions, when executed by the processor 250, may cause the battery image analysis device 200 to perform operations defined by the instructions.

In an embodiment, the memory 230 may include one or more software (e.g., an acquisition unit 231, a conversion unit 233, a configuration extraction unit 235, a coordinate data acquisition unit 231, a diagnosis unit 239, a model management unit 241, or a combination thereof).

The processor 250 may include a central processing unit, an application processor, a graphics processing unit, a neural processing unit (NPU), an image signal processor, a sensor hub processor, or a communication processor.

In an embodiment, the processor 250 may execute software stored in the memory 230 (e.g., the acquisition unit 231, the conversion unit 233, the configuration extraction unit 235, the coordinate data acquisition unit 231, the diagnosis unit 239, the model management unit 241, or a combination thereof) to control at least one other component (e.g., hardware or software component) of the battery image analysis device 200 connected to the processor 250, and perform various data processing or operations.

Hereinafter, a method for analyzing an image regarding a battery through components included in the battery image analysis device 200 will be described. In addition, in the following, for convenience of description, the description will be made on the premise that the image regarding the battery is a CT image obtained by imaging the inside of the battery through a computed tomography scanning device, and on the premise that a cylindrical battery with a jelly roll-shaped electrode assembly inside thereof.

The battery image analysis device 200 may include the acquisition unit 231, the conversion unit 233, the configuration extraction unit 235, the coordinate data acquisition unit 231, and the diagnosis unit 239.

The acquisition unit 231 may acquire a first image regarding the battery. Here, the first image may include one or more CT images obtained by imaging the inside of the battery according to one or more imaging environments. CT images may have different brightness and/or sizes depending on the specifications of the CT imaging device and the imaging environment, and the first image may include CT images captured based on various imaging environments using a plurality of CT scanners.

The conversion unit 233 may convert the first image into a second image corresponding to a designated style based on a deep learning model based on style transfer. Here, the designated style may include at least one of brightness and size of the image. For example, image A and image B captured by imaging device A and imaging device B, respectively, may be included in the first image, and the image A and image B may be converted into a second image based on the designated style. For example, the designated style may be a style based on the brightness and/or size of image C captured by imaging device C, and the conversion unit 233 may convert the image A and image B into the second image in a style based on the image C.

In an embodiment, the designated style may further include information regarding a target configuration. Here, the target configuration may include essential configurations (e.g., positive electrode and negative electrode) for diagnosing a state of the battery among the configurations of the battery. For example, the target configuration for calculating a curvature of the positive electrode may be the positive electrode of the battery.

In an embodiment, the conversion unit 233 may convert only the area corresponding to the target configuration in the first image into the second image. The conversion unit 233 may remove the remaining configurations except for the target configuration among the configurations of the battery included in the first image as noise and convert only the area corresponding to the target configuration in the first image into the second image. For example, since an area required to calculate the curvature of the electrode in the first image is an area corresponding to the electrode of the battery, the conversion unit 233 may determine the remaining configurations (e.g., tab and can) except for the electrode as noise and convert only the area corresponding to the electrode into the second image. Accordingly, the battery image analysis device 200 can improve the image analysis time and diagnosis rate by converting only the configuration for diagnosing the state of the battery into the second image.

Referring to the content described above, by converting a plurality of CT images captured according to a plurality of imaging environments into the second image corresponding to the same brightness and/or size, the method of analyzing the image and diagnosing the state of the battery may be unified to reduce the time for analyzing the image.

The configuration extraction unit 235 may extract each of the configurations of the battery from the second image. The configuration extraction unit 235 may extract an image for each of the configurations based on at least one pixel having a pixel value greater than or equal to a threshold value among a plurality of pixels included in the second image. The configuration extraction unit 235 may extract pixels for each of the configurations (e.g., the positive electrode, the negative electrode, tab, etc.) of the battery from the second image. For example, the configuration extraction unit 235 may extract an image regarding the positive electrode from the second image by adjusting the pixel values of the remaining pixels except for the at least one pixel to 0. As another example, the configuration extraction unit 235 may extract an image about the positive electrode from the second image by adjusting the pixel value of the at least one pixel to a first pixel value and the pixel values of the remaining pixels to a second pixel value different from the first pixel value.

In an embodiment, the configuration extraction unit 235 may extract pixels corresponding to the target configuration from the second image. The configuration extraction unit 235 may extract pixels corresponding to the target configuration from the second image including the target configuration. For example, the configuration extraction unit 235 may extract pixels corresponding to the electrode from the second image. The configuration extraction unit 235 may extract pixels corresponding to the electrode based on at least one pixel having a pixel value greater than or equal to a threshold value among a plurality of pixels included in the second image.

In an embodiment, the configuration extraction unit 235 may extract a center line of each of the configurations of the battery from the second image. For example, the configuration extraction unit 235 may extract a center line of an electrode of the battery from the second image. The configuration extraction unit 235 may extract a center line of the positive electrode of the battery from the second image. The configuration extraction unit 235 may extract the center line of the positive electrode from the second image using a skeleton extraction technique. Here, the skeleton extraction technique may mean an image processing technique that extracts a skeleton corresponding to a center line of a specific area of an image. In this case, as a method for extracting the skeleton, various methods used in the past, such as a thinning algorithm and a Medial Axis Transform (MAT) algorithm, may be used.

According to an embodiment, the configuration extraction unit 235 may perform blurring on the positive electrode image and then extract the center line of the positive electrode from the blurred positive electrode image using a skeleton extraction technique. For example, the configuration extraction unit 235 may perform blurring by adjusting the pixel values of the surrounding pixels of a specific pixel among the pixels having the second pixel value to a lower value as they get farther away from the specific pixel in a portion of the second image. Here, the blurred pixels may have pixel values that decrease as the distance from the specific pixel increases. Thereafter, the configuration extraction unit 235 may extract the skeleton of the blurred pixels using the skeleton extraction technique. For example, the configuration extraction unit 235 may extract the pixel having the highest pixel value among the blurred pixels as a skeleton. The configuration extraction unit 235 may extract the center line of the positive electrode from the second image by extracting the center line for all portions of the positive electrode based on at least one of the methods described above.

The coordinate data acquisition unit 231 may acquire coordinate data of pixels. Here, the coordinate data may be data based on the Cartesian coordinate system and the polar coordinate system. Hereinafter, for convenience of description, description will be made on the assumption that coordinate data is based on the Cartesian coordinate system.

The diagnosis unit 239 may diagnose a state of the battery based on the coordinate data. The diagnosis unit 239 may calculate one or more of the curvature and flatness fraction of the battery based on the coordinate data. The diagnosis unit 239 may diagnose the state of the battery by calculating the curvature and/or flatness fraction of the electrode assembly included in the battery. The electrode assembly of the cylindrical battery may be manufactured in the form of a jelly-roll in which the positive electrode, the negative electrode, and the separator are wound in a circular shape. As the battery is repeatedly charged and discharged, the electrode assembly expands and contracts repeatedly, and the shape of the electrode assembly may be deformed when these charging and discharging cycles continue. For example, the positive electrode, negative electrode, and/or separator wound in a circular shape may flatten or collapse toward the center. In this case, since a decrease in the capacity and decrease in the high-rate characteristics of the battery may occur, a decrease in battery efficiency may be prevented in advance by calculating the flatness fraction of the electrode assembly and diagnosing the state of the battery through this.

In an embodiment, the diagnosis unit 239 may calculate the curvature and/or flatness based on the centerline of the electrode assembly. In an embodiment, the diagnosis unit 239 may calculate the curvature of the electrode assembly. The diagnosis unit 239 may calculate the flatness fraction of the electrode assembly based on the calculated curvature. According to an embodiment, the diagnosis unit 239 may calculate the curvature of the innermost n-turn centerline of the centerline of the electrode assembly, and calculate the flatness fraction based on the calculated curvature. According to an embodiment, the diagnosis unit 239 may calculate the curvature based on coordinate data of the centerline. In an embodiment, the diagnosis unit 239 may calculate the flatness fraction of the positive electrode of the battery based on the centerline. Here, the flatness fraction of the positive electrode may be an indicator of the extent to which the positive electrode included in the jelly-roll type electrode assembly has deformed from its initial wound form.

The battery image analysis device 200 may further include a model management unit 241. The model management unit 241 may generate a deep learning model based on a generative adversarial network (GAN) algorithm. Here, the GAN is one of the artificial intelligence technologies called adversarial generative neural networks, and may be a type of machine learning framework used for unsupervised learning. The deep learning model based on the GAN algorithm may be divided into two different networks called the generator and the discriminator and may be a model that adversarially trains two different networks to generate data similar to actual data. The generator may be a model that generates data similar to actual data, and the discriminator may be a model that discriminates data generated by the generator from actual data.

The model management unit 241 may store training data for training a deep learning model. In an embodiment, the training data may include a plurality of input images for training corresponding to the first image and a plurality of output images for training corresponding to the second image. For example, the input images for training may include A image, B image, and C image captured by A imaging device, B imaging device, and C imaging device, respectively. In an embodiment, training data may be artificially generated. For example, the training data may be artificially generated through an image generation program based on the configuration of the battery and the thickness information of the configuration.

The model management unit 241 may train a deep learning model. The model management unit 241 may train the deep learning model based on training data. For example, the generator of the deep learning model may generate B₂ image similar to A image captured by A imaging device, and the discriminator of the deep learning model may discriminate the difference between the B₂ image and the A image. Accordingly, the generator is trained to generate the B₂ image similar to the A image, and the discriminator is trained to discriminate the difference between the B₂ image and the A image, so that the deep learning model may be trained to convert a first image (e.g., B₁ image) into a second image (e.g., B₂ image) based on a designated style (e.g., A image).

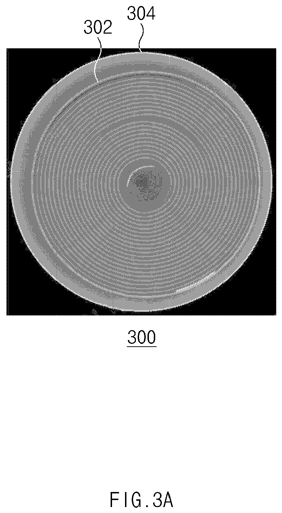

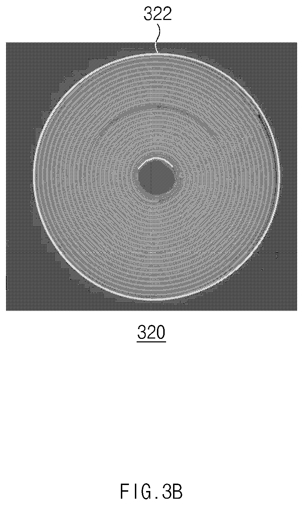

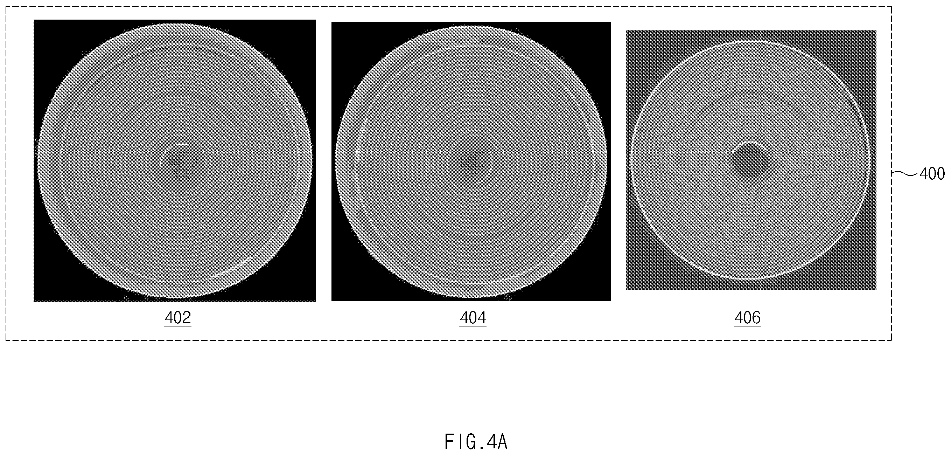

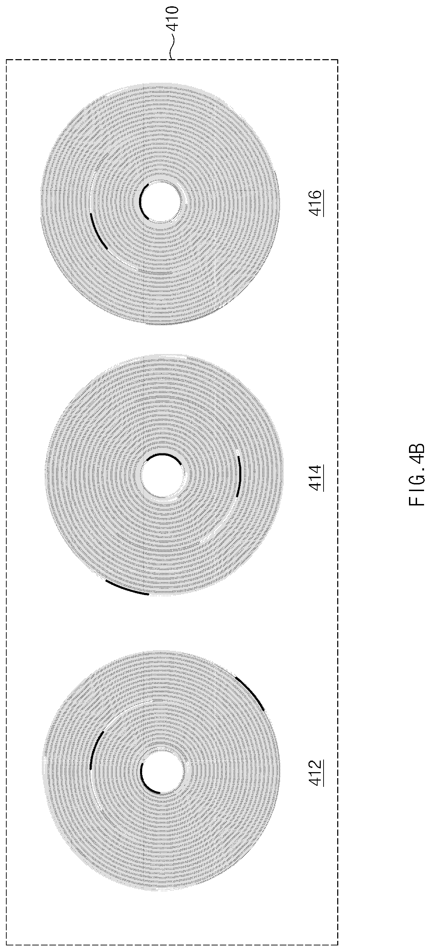

FIGS. 3a and 3b are drawings showing a first image regarding a battery acquired by a battery image analysis device according to an embodiment. FIGS. 4a and 4b illustrate a first image and a second image converted from the first image according to an embodiment.

Referring to FIGS. 3a and 3b, the first image may include A image 300 and B image 320 captured by A imaging device and B imaging device, respectively. The A image 300 and the B image 320 may be CT images captured based on different imaging environments. The A image 300 includes a jelly-roll-shaped electrode assembly 302 of a cylindrical battery and a can 304 protecting the electrode assembly 302, but the B image 320 includes only the electrode assembly 322, and thus it can be confirmed that the two images have different imaging ranges. In addition, referring to the electrode assembly 302 of the A image 300 and the electrode assembly 322 of the B image 320, it can be confirmed that brightness values of the two images are different.

Referring to FIGS. 4a and 4b, the battery image analysis device 200 may convert a first image 400 into a second image 410 using a deep learning model. Here, an A₁ image 402 and an A₂ image 404 included in the first image 400 are CT images captured by A imaging device, A₁ image 402 may be the same CT image as the A image 300 of FIG. 3, and B image 406 may be a CT image captured by B imaging device and may be the same CT image as the B image 320 of FIG. 3.

The battery image analysis device 200 may unify the brightness and/or size of the image by converting the first image 400 into the second image 410 based on a designated style using a deep learning model, thereby shortening the time for diagnosing the state of the battery through image analysis.

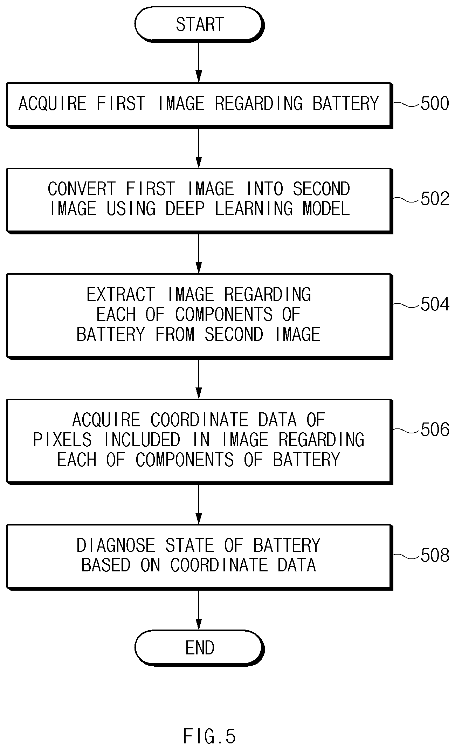

FIG. 5 is a flowchart showing the operating method of the battery image analysis device.

Referring to FIG. 5, in operation 500, the battery image analysis device 200 may acquire a first image regarding the battery.

In operation 502, the battery image analysis device 200 may convert the first image into a second image corresponding to a designated style based on a deep learning model based on style transfer.

In an embodiment, the battery image analysis device 200 may convert only the target configuration among the battery configurations included in the first image into the second image. The battery image analysis device 200 may remove the remaining configurations except for the target configuration among the battery configurations included in the first image as noise and convert only the area corresponding to the target configuration in the first image into the second image.

In operation 504, the battery image analysis device 200 may extract each of components of the battery from the second image. The battery image analysis device 200 may extract an image for each of the configurations based on at least one pixel having a pixel value greater than or equal to a threshold value among a plurality of pixels included in the second image. The battery image analysis device 200 may extract pixels for each of the battery configurations (e.g., the positive electrode, the negative electrode, and tabs, etc.) from the second image.

In an embodiment, the battery image analysis device 200 may extract pixels corresponding to the target configuration from the second image. The battery image analysis device 200 may extract pixels corresponding to the target configuration from the second image including the target configuration.

In an embodiment, the battery image analysis device 200 may extract a center line of each of the components of the battery from the second image. For example, the battery image analysis device 200 may extract a center line of the battery electrode from the second image. The battery image analysis device 200 may extract a center line of a positive electrode of the battery from the second image. The battery image analysis device 200 may extract the center line of the positive electrode from the second image using a skeleton extraction technique.

According to an embodiment, the battery image analysis device 200 may perform blurring on the positive electrode image and then extract the center line of the positive electrode from the blurred positive electrode image using a skeleton extraction technique.

In operation 506, the battery image analysis device 200 may acquire coordinate data of pixels included in the image regarding each of the components of the battery.

In operation 508, the battery image analysis device 200 may diagnose a state of the battery based on the coordinate data. The battery image analysis device 200 may calculate one or more of the curvature and flatness fraction of the battery based on the coordinate data. The battery image analysis device 200 may diagnose the state of the battery by calculating the curvature and/or flatness fraction of the electrode assembly included in the battery.

The terms "include," "configure," or "have" described above, unless specifically stated to the contrary, mean that the corresponding component may be included, and therefore should be interpreted as being able to further include other components rather than excluding other components. All terms including technical or scientific terms have the same meaning as commonly understood by a person skilled in the art to which the embodiments disclosed in this document belong, unless otherwise defined. Terms commonly used, such as terms defined in the dictionary, should be interpreted as being consistent with the contextual meaning of the relevant technology, and should not be interpreted in an idealized or overly formal sense unless clearly defined in this document.

The above description is merely an illustrative description of the technical idea disclosed in this document, and those skilled in the art to which the embodiments disclosed in this document belong may make various modifications and variations without departing from the essential characteristics of the embodiments disclosed in this document. Accordingly, the embodiments disclosed in this document are intended to describe rather than limit the technical ideas of the embodiments disclosed in this document, and the scope of the technical ideas disclosed in this document is not limited by these embodiments. The scope of protection of the technical ideas disclosed in this document should be interpreted in accordance with the scope of the claims below, and all technical ideas within the equivalent scope should be interpreted as being included in the scope of rights of this document.

## Claims

1. A battery image analysis device, comprising:
an acquisition unit configured to acquire a first image regarding a battery;
a conversion unit configured to convert the first image into a second image corresponding to a designated style including one or more of brightness and size of an image based on a deep learning model based on style transfer;
a configuration extraction unit configured to extract an image regarding each of the configurations of the battery based on a plurality of pixels included in the second image;
a coordinate data acquisition unit configured to acquire coordinate data of pixels of each of the configurations; and
a diagnosis unit configured to diagnose a state of the battery based on the coordinate data.

2. The battery image analysis device of claim 1, wherein the configuration extraction unit is configured to extract the image regarding each of the configurations of the battery based on at least one pixel having a pixel value greater than or equal to a threshold value among a plurality of pixels included in the second image.

3. The battery image analysis device of claim 1, wherein the designated style further includes configuration information regarding a target configuration among the configurations of the battery included in the first image,
the conversion unit is configured to convert an image corresponding to the target configuration among the configurations of the battery included in the first image into the second image based on the configuration information, and
the configuration extraction unit is configured to extract the image corresponding to the target configuration from the second image.

4. The battery image analysis device of claim 1, wherein the diagnosis unit is configured to diagnose the state of the battery by calculating one or more of a curvature and a flatness fraction of the battery based on the coordinate data.

5. The battery image analysis device of claim 1, wherein the battery image analysis device includes a model management unit configured to generate the deep learning model based on a generative adversarial network (GAN) algorithm.

6. The battery image analysis device of claim 5, wherein the model management unit is configured to store training data including a plurality of input images for training corresponding to the first image and a plurality of output images for training corresponding to the second image, and train the deep learning model based on the training data.

7. An operating method of a battery image analysis device, comprising:
an operation of acquiring a first image regarding a battery;
an operation of converting the first image into a second image corresponding to a designated style including one or more of brightness and size of an image based on a deep learning model based on style transfer;
an operation of extracting an image regarding each of the configurations of the battery based on a plurality of pixels included in the second image;
an operation of acquiring coordinate data of pixels of each of the configurations; and
an operation of diagnosing a state of the battery based on the coordinate data.

8. The operating method of claim 7, wherein the operation of extracting includes an operation of extracting the image regarding each of the configurations of the battery based on at least one pixel having a pixel value greater than or equal to a threshold value among a plurality of pixels included in the second image.

9. The operating method of claim 7, wherein the designated style further includes configuration information regarding a target configuration among the configurations of the battery included in the first image,
the operation of converting includes an operation of converting an image corresponding to the target configuration among the configurations of the battery included in the first image into the second image based on the configuration information, and
the operation of extracting includes an operation of extracting the image corresponding to the target configuration from the second image.

10. The operating method of claim 7, wherein the operation of diagnosing includes an operation of diagnosing the state of the battery by calculating one or more of a curvature and a flatness fraction of the battery based on the coordinate data.

11. The operating method of claim 7, further comprising:
an operation of generating the deep learning model based on a generative adversarial network (GAN) algorithm.

12. The operating method of claim 11, further comprising:
an operation of storing training data including a plurality of input images for training corresponding to the first image and a plurality of output images for training corresponding to the second image, and training the deep learning model based on the training data.
